# EUROPÄISCHE PATENTSCHRIFT

(11) **EP 0 728 066 B1**
(45) Veröffentlichungstag und Bekanntmachung des Hinweises auf die Patenterteilung: **21.10.1998**
(21) Anmeldenummer: 95900138.9
(22) Anmeldetag: 11.11.1994
(51) Int. Cl.: B29C 47/40

(54) **MEHRWELLIGE KONTINUIERLICH ARBEITENDE MISCHMASCHINE FÜR PLASTIFIZIERBARE MASSEN**
MULTI-SHAFT CONTINUOUSLY OPERATING MIXER FOR MIXING PLASTIFIABLE MATERIALS
MELANGEUR A PLUSIEURS ARBRES FONCTIONNANT EN CONTINU POUR MATIERES PLASTIFIABLES

(30) Priorität: 12.11.1993 DE 4338795
(43) Veröffentlichungstag der Anmeldung: 28.08.1996
(73) Patentinhaber: COMPEX GmbH Compoundier- und Extrusionsanlagen, 53426 Schalkenbach (DE)
(72) Erfinder: ROCKSTEDT, Siegward, D-53426 Schalkenbach (DE)
(74) Vertreter: Bardehle, Heinz, Dipl.-Ing.
(86) Internationale Anmeldenummer: EP9403738
(87) Internationale Veröffentlichungsnummer: WO9513181

(56) Entgegenhaltungen:
- EP-A- 0 165 093
- DE-B- 1 044 041
- DE-C- 815 103
- DE-C- 4 015 814
- US-A- 3 941 535
- US-A- 4 541 270

## Beschreibung

Die Erfindung bezieht sich auf eine mehrwellige kontinuierlich arbeitende Mischmaschine für plastifizierbare Massen mit zwei in einem Gehäuse drehenden Wellen, die jeweils ein die betreffende Welle umgebendes zylindrisches Gehäuseteil durchsetzen und Einzugs- und Austragszonen sowie dazwischen mindestens eine Aufschmelz- und eine Mischzone aufweisen wobei die Einzugs- und Austragszonen durch ineinandergreifende gleichsinnig drehende Förderschnecken gebildet und in den Aufschmelz- und Mischzonen gegenüberliegende Mischelemente angeordnet sind, deren Kanten beim Drehen mit geringem Spiel aneinander vorbeilaufen, wobei zur Bildung einer sich über die Mischelemente erstrekkenden Kammer die Kanten von dem sie umgebenden Gehäuseteil eine gegenüber dem Spiel wesentlich größeren Abstand einhalten

Eine derartige Maschine ist aus der DE-OS 42 02 821 bekannt. Bei dieser Maschine werden als Mischelemente axial gestreckte Polygone verwendet, deren Kanten beim Drehen nicht ineinander eingreifend mit geringem Spiel aneinander vorbeilaufen, wodurch sich ein ausgeprägter, gewollter Kneteffekt ergibt. Dieser Kneteffekt entsteht dadurch, daß die Kanten in das geförderte Material eindringen und dieses zur Seite drücken, wobei keine besonders großen Scherkräfte von dem Material aufzunehmen sind. Um dennoch die jeweils erforderliche Knetwirkung zu erzielen, werden die Polygone entsprechend lang ausgebildet.

Es ist weiterhin aus der US-PS 4,541,270 eine Maschine zum Testen von Plastikmaterial, insbesondere im Laboratorium, bekannt, mit der die Eigenschaften des Materials für ein späteres Extrudieren ermittelt werden sollen. Hierzu wird eine Doppelschnecke verwendet, die durchgehend zweiachsig ausgebildet ist und deren beide Achsen sich gegensinnig drehen. Die Doppelschnecke besitzt an ihren beiden Enden jeweils ein Paar von Förderschnecken, die jeweils eine derartige Steigung aufweisen, daß ihre Förderrichtungen aufeinander zulaufen. Diese Förderschneckenpaare fördern in eine zwischen ihnen liegende Zirkulationzone, in die wegen der vorstehend erwähnten Steigungsrichtung der Förderschnecken also Plastikmaterial sowohl von dem einen Förderschneckenpaar als auch von dem anderen Förderschneckenpaar hineingefördert wird. In dieser Zirkulationszone muß das hineingeförderte Material zwangsläufig verweilen, was auch beabsichtigt ist, da von dem einen Paar in die Zirkulationszone hineingefördertes Material von dem anderen gegenläufig fördernden Paar, falls das Material in dessen Bereich gelangt, sofort in die Zirkulationszone zurückgefördert wird. Infolgedessen kann in dieser Testmaschine immer nur chargenweise gearbeitet werden, nämiich maximal mit der Füllmenge der Zirkulationszone. Das zu testende Material wird über einen oder zwei Einlässe zugeführt, wobei der eine Einlaß zu dem einen Förderschneckenpaar und der andere Einlaß zu dem anderen Förderschneckenpaar führt. Werden beide Einläße beschickt, so fördern beide Förderschneckenpaare in die Zirkulationszone hinein. Um dabei ein Austreten von Material aus den Einläßen zu verhindern, können diese verschlossen werden. Der Sinn dieser Maßnahmen ist, über den bzw. die Einläße zugeführtes Material in der Zirkulationszone zu belassen und dort Betriebsbedingungen auszusetzen, deren Werte über Sensoren in der Zirkulationszone gemessen und gespeichert werden. Nach erfolgtem Test wird das in der Zirkulationszone gehaltene Material entfernt, wozu die Schnecken aus ihren Bohrungen herausgezogen werden. Die bekannte Maschine dient also nicht dazu, eine plastifizierbare Masse kontinuierlich zu behandeln und ebenso kontinuierlich auszutragen. Die Maschine kann nur im diskontinuierlichen Betrieb verwendet werden, wozu am Ende einer Betriebsphase die Maschine auseinandergenommen werden muß.

Der Erfindung liegt die Aufgabe zugrunde, die Mischwirkung der eingangs genannten Maschine zu steigern, ohne daß dabei besonders hohe Scherkräfte auftreten, um eine besonders intensive Dispergierwirkung zu erzielen

Erfindungsgemäß geschieht dies dadurch, daß die Mischelemente aus im wesentlichen gleichlangen Prozeßschneckenelementen mit derartiger Steigung bestehen, daß innerhalb der Kammer das eine Prozeßschneckenelement vorwärts und das andere Prozeßschneckenelement rückwärts fördert

Durch die gegenläufig wirkenden Prozeßschneckenelemente wird in der Kammer, die im wesentlichen durch den Bereich des Zwischenraums zwischen der Gehäusewandung und den Kanten der Prozeßschneckenelemente gebildet wird, ein Kreislauf des in der Kammer befindlichen Materials erzeugt, da das eine Element vorwärts und das andere rückwärts fördert, so daß von dem vorwärts geförderten Material ständig Material wieder rückwärts gefördert wird. Dieser Vorgang spielt sich in der Kammer kontinuierlich ab, wobei das darin befindliche Material mehrfach diesem Kieislauf unterworfen wird und infolgedessen einer entsprechend intensiven Dispergierung unterliegt. Die miteinander zu vermischenden Materialien werden besonders gleichmäßig verteilt, wobei Füllstoffe und Pigmente gegebenfalls aufgeschlossen und besonders gleichmäßig verteilt eingearbeitet werden Besonders hohe Scherkräfte können dabei nicht auftreten, da das in der Kammer befindliche Material, das von den Kanten der Prozeßschneckenelemente verdrängt wird, genügend Freiraum in der Kammer und insbesondere gegenüber dem jeweils anderen Prozeßschneckenelement erhält, so daß es relativ leicht ausweichen kann- Der Kreislauf des Materials hängt dabei von dem Nachschieben weiteren Materials durch die vorhergehenden Förderschnecken (Einzugszone) ab, womit die Verweilzeit in der Kammer durch die Beschickung der Maschine bestimmt werden kann. Diese Verweilzeit wird zweckmäßig so eingestellt, daß das Material jeweils mehrere Kreisläufe durchläuft

Es sei noch darauf hingewiesen, daß es aus der US-PS 2,615,199 bekannt ist, bei einer Verarbeitungsmaschine für plastizierbare Massen mit gegenläufig angetriebenen, nicht ineinandergreifenden Förderschnecken jeweils eine Förderschnecke durch ein kurzes Schneckenelement zu unterbrechen, das aufgrund seiner entgegengesetzt gerichteten Steigung seiner Gänge an der betreffenden Stelle eine Stauwirkung erzielt, die sich jedoch nur wenig intensiv auswirken kann, da die gegenüberliegende Förderschnecke mit ihren Gängen genügend Freiraum bietet, um das Material weiter vorwärts zu fördern. Die Anordnung eines solchen rückwärts fördernden Schneckenelementes ist bei beiden Förderschnecken vorgesehen, wobei die genannten Schneckenelemente einen solchen Abstand voneinander aufweisen, daß auf jeden Fall einem solchen Schneckenelement eine längere Zone der jeweils anderen Förderschnecke gegenübersteht. Abgesehen davon, daß die bekannte Maschine nicht mit gleichsinnig drehenden Förderschnecken arbeitet und diese auch nicht ineinander eingreifen, fehlt es bei der bekannten Maschine an der Ausbildung einer Kammer im Bereich einander gegenüberstehender Schneckenelemente, da einem Schneckenelement der einen Förderschnecke stets eine längere Zone der anderen Förderschnecke gegenübersteht. Infolgedessen kann auch schon mangels einer Kammerbildung ein Kreislauf im Bereich eines Schneckenelementes praktisch nicht entstehen und darüber hinaus auch die Verweilzeit im Bereich eines Schneckenelementes praktisch nicht beeinflusst werden, da stets mindestens eine Förderschnecke auf das zu behandelnde Material einwirkt.

Weiterhin sei auf die DE-AS 1 679 884 verwiesen, die sich ebenfalls auf eine Behandlungsmaschine für plastifizierbare Massen bezieht. Bei dieser Maschine sind zur Erzeugung einer Mischwirkung ineinandergreifende Knetelemente in Form von gegenüberliegenden Scheiben vorgesehen, die mit zwei oder drei axial verlaufenden Kanten versehen sind. Die relativ schmalen Knetscheiben rufen in dem zu verarbeitenden Material aufgrund des Ineinandergreifens der Knetscheiben eine starke Scherwirkung und damit große Wärmeentwicklung hervor. Die Maschine besitzt gleichsinnig drehende, ineinandergreifende Förderschnecken, die im Anschluß an die Knetscheiben für ein relativ kurzes Stück nicht ineinandergreifen und mit unterschiedlicher Steigung ausgebildet sind, so daß die Förderschnecken hier eine mehr oder minder starke Förderwirkung ausüben Dabei soll sich in dem betreffenden Bereich eine Längsmischwirkung ergeben, die jedoch offensichtlich keinerlei Kreislauf des Materials in dem betreffenden Bereich umfaßt, worauf es bei der Erfindung entscheidend ankommt.

Es muß daher als überraschend angesehen werden, daß durch die Maßnahme der Anordnung von im wesentlichen gleichlangen Prozeßschneckenelementen mit gegenläufiger Steigung sich innerhalb einer durch die Prozeßschneckenelemente definierten Kammer ein echter Kreislauf für das zu behandelnde Material erzielen läßt, der für eine besonders intensive Dispergierwirkung verantwortlich ist.

Um insbesondere bei höheren Drehzahlen der Förderschnecken die Geschwindigkeit im Kreislauf des Materials im Bereich der Kammer zu begrenzen, gestaltet man die Prozeßschneckenelemente zweckmäßig so, daß benachbarte Schneckengänge durch Vertiefungen untereinander verbunden sind. Aufgrund dieser Vertiefungen kann das zu behandelnde Material entgegen der Förderrichtung des betreffenden Prozeßschneckenelementes ausweichen, wird also von dem Schneckenelement nicht mitgenommen und kann gegebenenfalls zu dem jeweils anderen Schneckenelement übertreten, womit gewissermaßen ein Kurzschluß im Kreislauf entsteht. Im Rahmen dieser Kurzschlüsse bildet sich dann eine besonders intensive Dispergierwirkung aus.

Um die Vertiefungen im Sinne des intensiven Dispergierens zusätzlich auszunutzen, kann man die Prozeßschneckenelemente so gestalten, daß die die Schneckengänge begrenzenden Kanten der Prozeßschneckenelemente durch zylindrische Abflachung Verbreiterungen aufweisen und die Vertiefungen eine solche Schrägwirkung zu den Verbreiterungen besitzen, daß diese neben den Vertiefungen eine rautenartige Oberfläche darstellen Aufgrund der Rautenbildung ergeben sich an den Übergängen der Vertiefungen zu den Verbreiterungen schneidenartig auslaufende Kanten, die das dort anstehende Material zerteilen und in die jeweils benachbarten Gewindegänge schieben.

Aufgrund der Anordnung der Vertiefungen ergibt sich trotz der gegenläufigen Steigung der Prozeßschneckenelemente die Möglichkeit, die Kanten des einen Prozeßschneckenelementes mit so kurzen Vorsprüngen zu versehen, daß beim Drehen die Vorsprünge jeweils in die gegenüberliegenden Schneckengänge des anderen Prozeßschneckenelementes eintauchen und über die Vertiefung im anderen Prozeßschneckenelement aus diesem austauchen. Hierfür ist es natürlich erforderlich, daß die die beiden Förderschnecken bildenden Wellen, die in jedem Falle mit gleicher Drehzahl drehen, eine solche Drehwinkeleinstellung zueinander besitzen, daß bei jeder Umdrehung ein Vorsprung kurzzeitig von dem gegenüberliegenden Schneckengang und im Anschluß daran durch eine Vertiefung aufgenommen wird, so daß es bei der Drehung der Wellen zu keinem Anstoß eines Vorsprunges gegen das gegenüberliegende Prozeßschneckenelement kommen kann. Wegen des bei derartigen Mischmaschinen erforderlichen Antriebs mit gleicher Drehzahl ergibt sich für jeden Vorsprung dann nach 360° Umdrehung wieder der gleiche Effekt des Ein- und Austauchens in das jeweils gegenüberliegende Prozeßschneckenelement. Durch derartige Vorsprünge läßt sich die Dispersionswirkung der Maschine weiterhin erhöhen

Um die durch die Prozeßschneckenelemente definierten Kammern ständig gefüllt zu halten, sieht man zweckmäßig unmittelbar hinter den Prozeßschneckenelementen Stauelemente vor. Als Stauelemente haben sich als besonders geeignet kurze Schnecken mit unterbrochenem Rückfördergewinde ergeben. An den Stellen der Unterbrechungen des Gewindes kann dann das Material von einem Gewindegang in den anderen Gewindegang überströmen.

Es sei noch darauf hingewiesen, daß gegenüberliegende Prozeßschneckenelemente mehrfach hintereinander angeordnet werden können.

Ein Ausführungsbeispiel der Erfindung ist in den Figuren dargestellt. Es zeigen
- Fig. 1: eine Mischmaschine in Seitensicht
- Fig. 2: die gleiche Maschine in Draufsicht
- Fig. 3: zwei gegenüberliegende Prozeßschneckenelemente mit die Schneckengänge verbindenden Vertiefungen
- Fig. 4: zwei benachbarte Prozeßschneckenelemente mit verbreiterten Kanten und Vertiefungen
- Fig. 5: einen Querschnitt durch die Maschine längs der Linie V-V aus Fig. 2 unter Zugrundelegung von Prozeßschneckenelementen gemäß Fig. 4
- Fig. 6: einen ausschnittsweise gezeichneten Querschnitt durch die Maschine längs der Linie V-V unter Zugrundelegung von gegenüberliegenden Schneckenelementen gemäß Fig. 4 und Vorsprüngen auf einem Schneckenelement

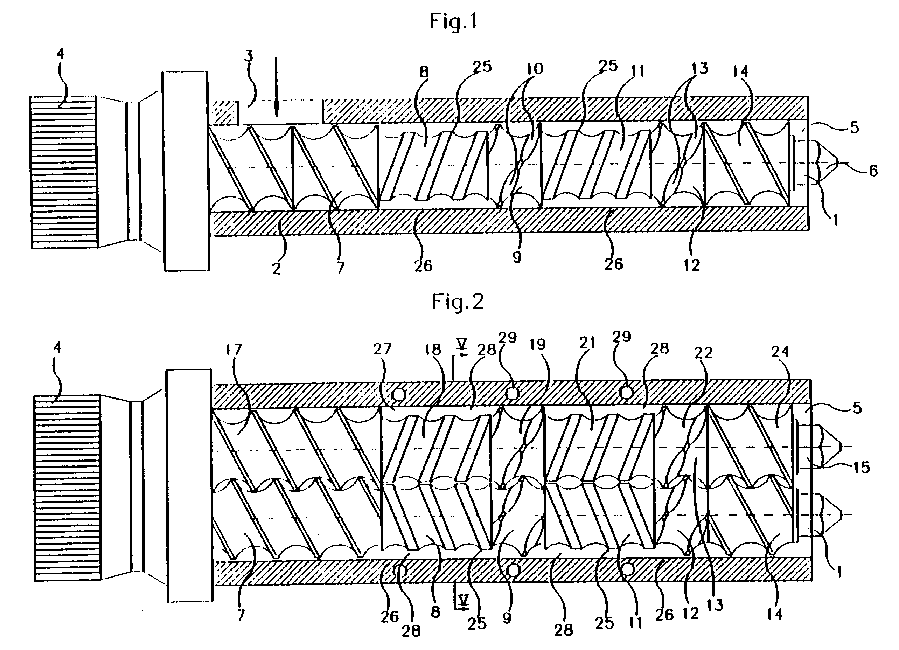

In der Fig. 1 ist eine zweiwellige Mischmaschine dargestellt, und zwar in Seitensicht, so daß nur eine Welle 1 in dem schematisch dargestellten Gehäuse 2 gezeigt ist. Das Gehäuse 2 besitzt die Einlaßöffnung 3 für die Zuführung des zu verarbeitenden Materials. Am linken Ende des Gehäuses 2 ist das Antriebsaggregat 4 gezeichnet. Am rechten Ende des Gehäuses 2 ist der Auslaß 5 vorgesehen, aus dem die Schneckenspitze 6 herausragt. Insofern handelt es sich um eine übliche Gestaltung einer zweiwelligen Mischmaschine.

Die Welle 1 besitzt im Bereich der Einlaßöffnung 3 die Förderschnecke 7, an die sich das Prozeßschneckenelement 8 anschließt. Auf das Prozeßschneckenelement 8 folgt eine relativ kurze Schnecke 9 als Stauelement mit gegenüber der Förderschnecke 7 gegenläufigem Schneckengewinde. Auf den beiden dargestellten Gewindegängen der Schnecke 9 sind die beiden Unterbrechungen 10/10 vorgesehen, um im Bereich der Schnecke 9 trotz ihrer Stauwirkung den notwendigen Durchsatz zu erlauben. An die Schnecke 9 schließt sich ein weiteres Prozeßschneckenelement 11 an, an das sich, wie nach dem Prozeßschneckenelement 8 vorgesehen, die als Stauelement wirkende gegenläufige Schnecke 12 mit Unterbrechungen 13 anschließt, so daß sowohl das Prozeßschneckenelement 8 und das Prozeßschneckenelement 11 gegen die Wirkung der Schnecken 9 und 11 arbeiten. Den Abschluß der Welle 1 bildet die Förderschnecke 14, die in der Austragszone das ihr zugeführte verarbeitete Material dem Auslaß 5 zuführt.

In Fig. 2 ist die zweiwellige Mischmaschine gemäß Fig. 1 in Draufsicht dargestellt. Neben der Welle 1 ist die zweite Welle 15 angeordnet, die zusammen mit der Welle 1 in gleichem Drehsinn durch das Antriebsaggregat 4 angetrieben wird. Beide Wellen laufen mit gleicher Drehzahl. Die in gleicher Weise wie die Welle 1 aufgebaute Welle 15 ist im Bereich der in der Fig. 2 nicht sichtbaren Einlaßöffnung 3 mit der Förderschnecke 17 (Einzugszone) versehen. die in die Gewindegänge der Förderschnecke 7 eingreift und umgekehrt. Es handelt sich dabei also um in bekannter Weise ineinander eingreifende. gleichsinnig angetriebene Förderschnecken 7 und 17, die aufgrund der ihnen innewohnenden Funktion das über die Einlaßöffnung 3 zugeführte Material von links nach rechts transportieren. Dabei gelangt das Material in den Bereich der Prozeßschneckenelemente 8 und 18, weiterhin zu den Stauelementen 9 und 19. weiterhin zu den Prozeßschneckenelementen 11 und 21 und schließlich über die Austragsschnecken 14.24 zum Ausgang 5.

Im Bereich der Prozeßschneckenelemente 8 und 18 sowie 11 und 21 wird das von den Förderschnecken 7 und 17 (Einzugszone) antransportierte Material gemischt. wobei das Material längs der Welle 1 vorwärts und längs der Welle 15 rückwärts gefördert wird. Das rückwärts geförderte Material trifft dann auf neu von den Förderschnecken 7 und 17 zugeführtes Material, so daß es auf das Prozeßschneckenelement 8 umgelenkt und von diesem wieder vorwärts gefördert wird. Es ergibt sich damit also ein Kreislauf, der sich umso häufiger wiederholt, je weniger Material von den Förderschnecken 7 und 17 nachgeschoben wird. Die Verweilzeit im Bereich der Prozeßschneckenelemente 8 und 18 ergibt sich also aus dem Nachschub an Material über die in der Einzugszone befindlichen Förderschnecken 7 und 17.

Der gleiche Vorgang wiederholt sich im Bereich der Prozeßschneckenelemente 11 und 21, wobei die jeweils folgenden Stauelemente 9 und 19 sowie 12 und 22 dafür sorgen, daß die die Prozeßschneckenelemente 8 und 18 sowie 11 und 21 umfassenden Bereiche ständig mit Material gefüllt bleiben

Aufgrund der Dimensionierung der Durchmesser der Prozeßschneckenelemente 8 und 18 bzw. 11 und 21, deren Kanten 25 beim Drehen mit geringem Spiel aneinander vorbeilaufen, so daß sich gegenüber der Innenwand 26 ein gegenüber dem Spiel wesentlich größerer Abstand ergibt, bildet sich jeweils im Bereich der Prozeßschneckenelemente 8 und 18 sowie 11 und 21 eine Kammer 27 bzw. 28 aus, die einerseits von den Förderschnecken 7 und 17 und den Stauelementen 9 und 19 bzw. den letzteren und den Stauelementen 12 und 22 begrenzt werden. Innerhalb dieser Kammern 27 und 28 bildet sich der oben erwähnte Kreislauf des zu bearbeitenden Materials aus.

Um dem zu verarbeitenden Material die notwendige Temperatur zu geben, kann das Gehäuse 2 beheizt werden Hierfür sind die Heizkanäle 29 vorgesehen, denen in bekannter Weise ein geeignetes Wärmeübertragungsmedium zugeleitet werden kann.

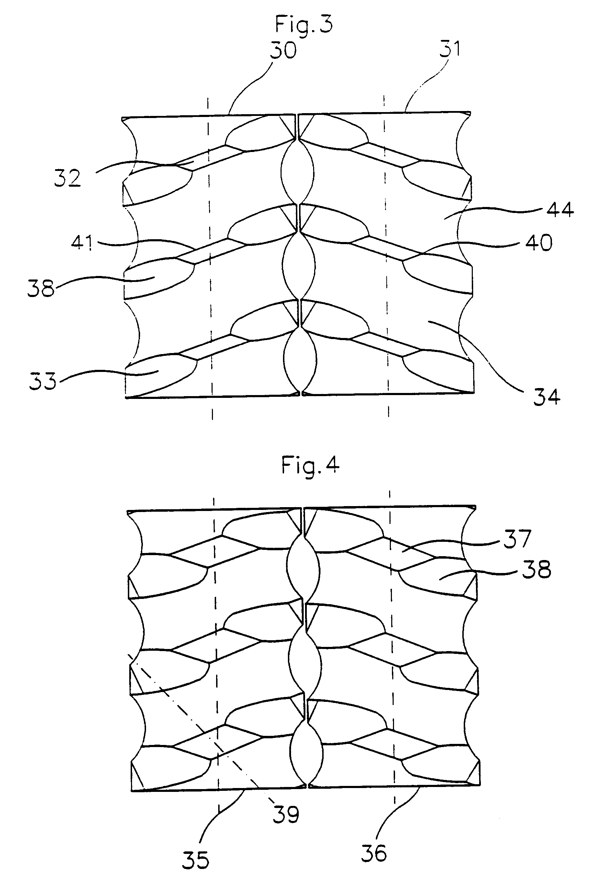

In der Fig. 3 sind in Draufsicht zwei gegenüberliegende Prozeßschneckenelemente 30 und 31 dargestellt, die an die Stelle der Prozeßschneckenelemente 8 und 18 gemäß Fig. 2 treten können Die Prozeßschneckenelemente 30 und 31 sind an ihren Kanten 32 durch die Vertiefungen 33 unterbrochen, wobei die Vertiefungen die Schneckengänge 34 miteinander verbinden Durch die Vertiefungen kann das zu bearbeitende Material von einem Schneckengang zum anderen überströmen, wodurch sich ständig eine intensive Durchmischung des Materials im Sinne einer guten Dispergierung ergibt.

Fig. 4 zeigt eine Variante der Ausführungsform der Prozeßschneckenelemente. Hier sind die Prozeßschneckenelemente 35 und 36 längs ihrer Kanten durch zylindrische Abflachung mit Verbreiterungen 37 versehen, die zusammen jeweils eine zylindrische Umhüllende bilden Die Verbreiterungen 37 sind durch Vertiefungen 38 unterbrochen, die eine durch die strichpunktierte Linie 39 angedeutete Schrägrichtung besitzen. Aufgrund dieser Schrägrichtung stellen sich die zwischen den Vertiefungen 38 liegenden Verbreiterungen 37 mit einer rautenartigen Oberfläche dar. An ihren Enden bildet die rautenartige Oberfläche jeweils eine Art Schneide 40, die in einer Kante 41 längs der betreffenden Vertiefung 38 weiterläuft. Durch diese Gestaltung wird auf die Schneide 40 auftreffendes Material verteilt und jeweils in die benachbarten Schneckengänge geschoben.

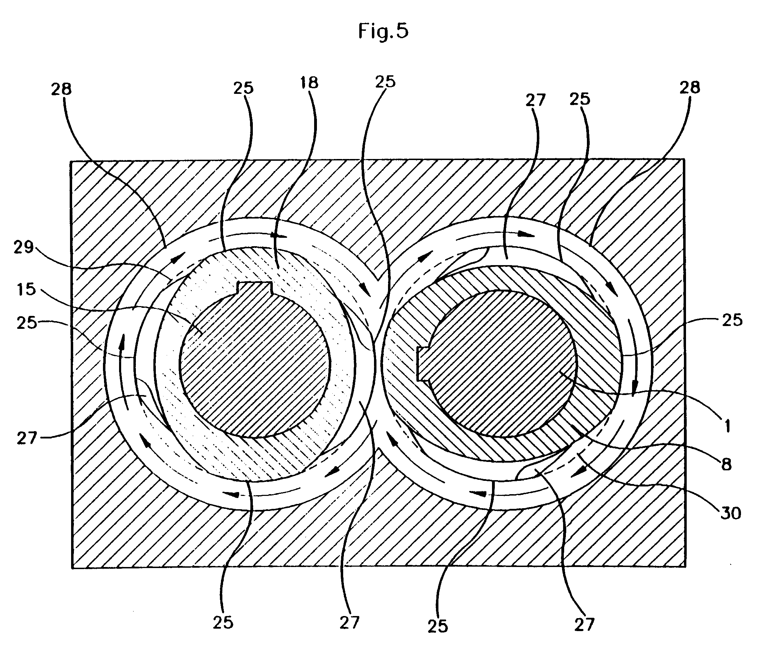

Fig. 5 zeigt einen Schnitt längs der Linie V-V aus Fig. 2. Fig. 5 zeigt die Welle 1 mit der Grundwelle 42 und die Welle 15 mit der Grundwelle 42. Die beiden Grundwellen durchsetzen in bekannter Weise das gesamte Gehäuse 2. Auf die Grundwellen sind die betreffenden Schnekken bzw. Schneckenelemente aufgeschoben. In der Schnittdarstellung nach Fig. 5 sind dies die Prozeßschneckenelemente 8 und 18. Die beiden Prozeßschneckenelemente 8 und 18 besitzen je ein zweigängiges Gewinde, von dem die Kanten 25 und die Vertiefungen 38 gemäß Fig. 4 dargestellt sind.

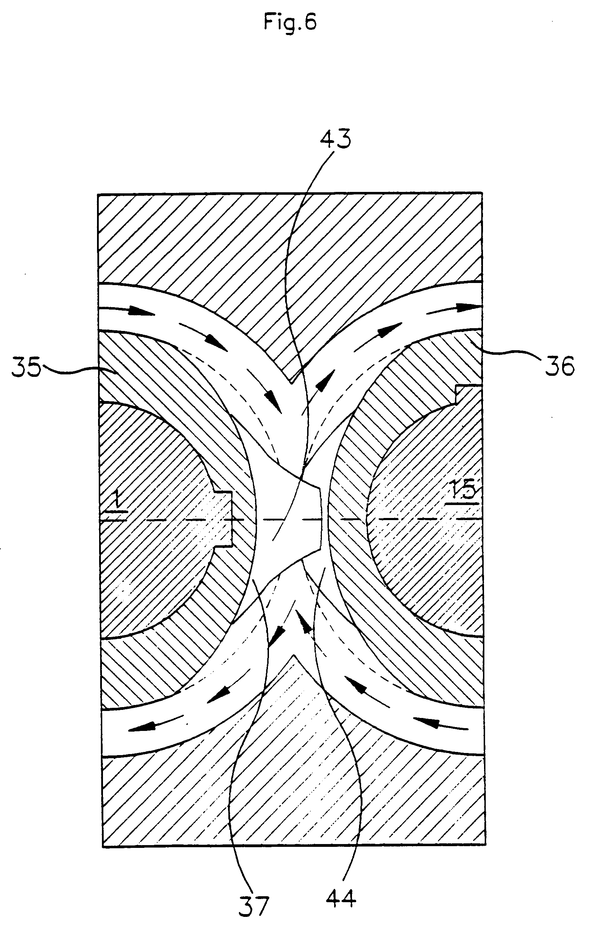

Bei der Fig. 6 handelt es sich um eine Abwandlung gegenüber der Darstellung nach Fig. 5, und zwar dahingehend, daß auf der rautenartigen Oberfläche der Verbreiterung der Vorsprung 43 angeordnet ist, der so kurz ist, daß er beim Drehen der beiden Wellen 1 und 15 kurzzeitig in den gegenüberliegenden Schneckengang 44 (siehe auch Fig. 4) auf der Welle 15 eintaucht und über die Vertiefung 38 aus dem betreffenden Prozeßschneckenelement 36 austaucht. Der Vorsprung 43 kann daher nicht gegen eine Oberfläche eines Elementes der Welle 15 anstoßen.

## Patentansprüche

1. Mehrwellige kontinuierlich arbeitende Mischmaschine für plastifizierbare Massen mit zwei in einem Gehäuse (2) drehenden Wellen (1,15), die jeweils ein die betreffende Welle umgebendes zylindrisches Gehäuseteil (2) durchsetzen und Einzugs- und Austragszonen sowie dazwischen mindestens eine Aufschmelz- und eine Mischzone aufweisen, wobei die Einzugs- und Austragszonen durch ineinandergreifende gleichsinnig drehende Förderschnecken (7,17;14,24) gebildet und in den Aufschmelz- und Mischzonen gegenüberliegende Mischelemente angeordnet sind, deren Kanten (25) beim Drehen mit geringem Spiel aneinander vorbeilaufen, wobei zur Bildung einer sich über die Mischelemente erstreckenden Kammer die Kanten (25) von dem sie umgebenden Gehäuseteil (2) einen gegenüber dem Spiel wesentlich größeren Abstand einhalten, **dadurch gekennzeichnet,** daß die Mischelemente aus im wesentlichen gleich langen Prozeßschnekkenelementen (8,18;11,21) mit gegensinniger Steigung bestehen, wobei innerhalb der Kammer (27,28) die Masse derart gefördert wird, daß das eine Prozeßschneckenelement (8,11) gegenüber dem anderen Prozeßschneckenelement (18,21) um soviel mehr vorwärts fördert, als der Kammer (27,28) im kontinuierlichen Betrieb von der Einzugszone her plastifizierbare Masse im Durchsatz zugeführt wird, deren Zuführgeschwindigkeit die Verweilszeit der Masse in der Kammer (27,28) bestimmt.

2. Maschine nach Anspruch 1, **dadurch gekennzeichnet,** daß benachbarte Schneckengänge der Prozeßschneckenelemente (30,31) durch Vertiefüngen (33) untereinander verbunden sind.

3. Maschine nach Anspruch 2, **dadurch gekennzeichnet,** daß die die Schneckengänge begrenzenden Kanten der Prozeßschneckenelemente (35,36) durch zylindrische Abflachung Verbreiterungen (37) aufweisen und die Vertiefungen (38) eine solche Schrägrichtung zu den Verbreiterungen (37) besitzen, daß diese neben den Vertiefungen (38) eine rautenartige Oberfläche darstellen.

4. Maschine nach Anspruch 2 oder 3, **dadurch gekennzeichnet,** daß die Kanten des einen Prozeßschneckenelementes (35) so kurze Vorsprünge (43) aufweisen, daß beim Drehen die Vorsprünge (43) jeweils in die gegenüberliegenden Schneckengänge (44) des anderen Prozeßschneckenelementes (36) eintauchen und über eine Vertiefung (38) im Schneckengang des anderen Prozeßschneckenelementes (36) aus diesem austauchen.

5. Maschine nach einem der Ansprüche 1 - 4, **dadurch gekennzeichnet,** daß unmittelbar hinter den Prozeßschneckenelementen Stauelemente (9,19;12,22) angeordnet sind.

6. Maschine nach Anspruch 5, **dadurch gekennzeichnet,** daß die Stauelemente (9,19;12,22) aus kurzen Schnecken mit unterbrochenem Rückfördergewinde bestehen.

## Claims

1. Multi-screw continuously-operating mixing machine for plasticisable materials, comprising two screws (1, 15) rotating in a housing (2), each traversing a cylindrical housing part (2) surrounding the relevant screw and having feed and discharge zones and at least one melting zone and one mixing zone situated therebetween, the feed and discharge zones being formed by intermeshing conveying screws (7, 17; 14, 24) rotating in the same direction and opposing mixing elements the edges (25) of which run past one another with little clearance during rotation being arranged in the melting and mixing zones, the distance between the edges (25) and the housing part (2) surrounding them being substantially greater than the clearance in order to form a chamber extending over the mixing elements, characterised in that the mixing elements consist of process screw elements (8, 18; 11, 21) of substantially identical length and opposite pitch, the material being conveyed within the chamber (27, 28) in such a manner that one process screw element (8, 11) conveys forwards to a much greater extent than the other process screw element (18, 21) as plasticisable material is fed through the chamber (27, 28) from the feed zone during continuous operation, the feed rate determining the dwell time of the material in the chamber (27, 28).

2. Machine according to claim 1, characterised in that adjacent screw flights of the process screw elements (30, 31) are connected together by means of recesses (33).

3. Machine according to claim 2, characterised in that the edges of the process screw elements (35, 36) delimiting the screw flights have broadened portions (37) produced by cylindrical flattening and the recesses (38) are inclined in such a direction relative to the broadened portions (37) that the latter constitute a rhombic surface alongside the recesses (38).

4. Machine according to claim 2 or claim 3, characterised in that the edges of one process screw element (35) have projections (43) which are so short that the projections (43) are each inserted into the opposing screw flights (44) of the other process screw element (36) during rotation and emerge from the other process screw element (36) via recesses (38) in the screw flight thereof.

5. Machine according to one of claims 1 - 4, characterised in that baffles (9, 19; 12, 22) are arranged immediately behind the process screw elements.

6. Machine according to claim 5, characterised in that the baffles (9, 19; 12, 22) consist of short screws with interrupted return threads.

## Revendications

1. Mélangeur en continu à plusieurs arbres pour masses plastifiables, comprenant deux arbres (1, 15) qui tournent dans un carter (2) et qui traversent chacun une partie de carter cylindrique (2) entourant l'arbre concerné et comportent des zones d'entrée et de sortie et, entre celles-ci, au moins une zone de fusion et une zone de mélange, les zones d'entrée et de sortie étant formées par des vis transporteuses (7, 17 ; 14, 24) qui sont en prise mutuelle et tournent dans le même sens, et dans les zones de fusion et de mélange étant disposés des éléments mélangeurs en vis-à-vis dont les arêtes (25) défilent les unes devant les autres avec un jeu réduit lors de la rotation, les arêtes (25) se trouvant, par rapport à la partie de carter (2) qui les entoure, à une distance nettement supérieure audit jeu afin de former une chambre s' étendant sur les éléments mélangeurs, caractérisé en ce que les éléments mélangeurs sont constitués par des éléments de vis de traitement (8, 18 ; 11, 21) de longueur sensiblement identique et de pas opposé, la masse étant transportée à l'intérieur de la chambre (27, 28) de façon que l'un des éléments de vis de traitement (8, 11) déplace vers l'avant, par rapport à l'autre élément de vis de traitement (18, 21), un volume égal au débit de masse plastifiable qui est fourni à la chambre (27, 28) en mode de fonctionnement continu à partir de la zone d'entrée et dont la vitesse d'alimentation détermine le temps de séjour de la masse dans la chambre (27, 28).

2. Mélangeur selon la revendication 1, caractérisé en ce que les filets voisins des éléments de vis de traitement (30, 31) sont reliés entre eux par des creux (33) .

3. Mélangeur selon la revendication 2, caractérisé en ce que les arêtes des éléments de vis de traitement (35, 36) qui délimitent les filets comportent des méplats (37) obtenus par aplatissement cylindrique, et les creux (38) présentent, par rapport aux méplats (37), une orientation oblique telle que ces derniers forment, à côté des creux (38), des surfaces en losange.

4. Mélangeur selon la revendication 2 ou 3, caractérisé en ce que les arêtes de l'un des éléments de vis de traitement (35) présentent des saillies (43) suffisamment courtes pour que, lors de la rotation, chaque saillie (43) s'engage dans le filet opposé (44) de l'autre élément de vis de traitement (36) et en ressorte par un creux (38) du filet de l'autre élément de vis de traitement (36).

5. Mélangeur selon l'une des revendications 1 à 4, caractérisé en ce que des éléments de retenue (9, 19 ; 12, 22) sont disposés juste derrière les éléments de vis de traitement.

6. Mélangeur selon la revendication 5, caractérisé en ce que les éléments de retenue (9, 19 ; 12, 22) sont constitués par des vis sans fin courtes à filetage refoulant interrompu.
